# EUROPÄISCHE PATENTANMELDUNG

(11) **EP 0 908 337 A2**
(43) Veröffentlichungstag der Anmeldung: **14.04.1999**
(21) Anmeldenummer: 98116602.8
(22) Anmeldetag: 02.09.1998
(51) Int. Cl.: B60H 1/00

(54) **Kraftfahrzeugklimaanlage mit mehreren Betriebszuständen**

(30) Priorität: 08.10.1997 DE 19744414
(71) Anmelder: DaimlerChrysler AG, 70567 Stuttgart (DE)
(72) Erfinder: Heinle, Dieter, 73655 Plüderhausen (DE); Volz, Wolfgang, 71106 Magstadt (DE)

(57) **Zusammenfassung**

Die Erfindung bezieht sich auf eine Kraftfahrzeugklimaanlage mit mehreren, von einer zugehörigen Steuereinheit einstellbaren Betriebszuständen. Es wird eine derartige Kraftfahrzeugklimaanlage vorgeschlagen, bei der die Steuereinheit den jeweiligen Betriebszustand der Kraftfahrzeugklimaanlage in Abhängigkeit von einem vorgebbaren Sollbetriebsgebiet für das Kraftfahrzeug oder von dem Gebiet, in welchem sich das Fahrzeug momentan befindet, selbsttätig einstellt.

## Beschreibung

Die Erfindung bezieht sich auf eine Kraftfahrzeugklimaanlage mit mehreren, von einer zugehörigen Steuereinheit einstellbaren Betriebszuständen.

Bei einer aus der US 5 344 070 bekannten derartigen Kraftfahrzeugklimaanlage ist eine Steuereinheit vorgesehen, die in Abhängigkeit mehrerer Temperatursensoren, mehrerer Lichteinstrahlungssensoren und der Stellung eines Temperaturwahlschalters selbsttätig einen entsprechenden Betriebszustand der Kraftfahrzeugklimaanlage einstellt.

Aus der DE 196 19 643 C1 ist ein Kraftfahrzeug mit einer Kraftfahrzeugklimaanlage bekannt, die in Abhängigkeit davon ansteuerbar ist, ob sich das Kraftfahrzeug in einem nach oben abgedeckten Bereich eines Wegenetzes befindet. Dazu ist eine Navigationseinrichtung zur laufenden Bestimmung der genauen Fahrzeugposition vorgesehen, wodurch insbesondere die topographische Situation in der direkten Umgebung des Fahrzeuges ermittelbar ist. Damit soll die Kraftfahrzeugklimaanlage neben weiteren Funktionseinheiten des Fahrzeuges in Abhängigkeit von dieser Situation angesteuert werden. Beispielhaft sind Fahrbahnüberdachungen, wie Tunnels, Unterführungen und andere Gebäude angeführt, die eine Änderung des Klimaanlagenbetriebes notwendig machen könnten und auf die mit Hilfe der vorgeschlagenen Klimaanlagensteuerung reagiert werden kann.

Aufgabe der Erfindung ist es, eine Kraftfahrzeugklimaanlage der eingangs genannten Art bereitzustellen, die eine hinsichtlich Klimatisierungskomfort verbesserte Funktionalität aufweist.

Diese Aufgabe wird erfindungsgemäß dadurch gelöst, daß die Steuereinheit den jeweiligen Betriebszustand der Kraftfahrzeugklimaanlage in Abhängigkeit von einem vorgebbaren Sollbetriebsgebiet für das Kraftfahrzeug in Form einer Region oder eines Landes oder von der Region oder dem Land, in welchem sich das Fahrzeug befindet, selbsttätig einstellt. Dadurch wird eine automatische Anpassung des Betriebszustandes der Kraftfahrzeugklimaanlage an das Betriebsgebiet des Kraftfahrzeuges und damit an eine bestimmte Benutzergruppe oder eine Klimaregion ermöglicht. Somit vermag die Steuereinheit einen dem Betriebsgebiet des Kraftfahrzeuges angepaßten Betriebszustand der Kraftfahrzeugklimaanlage aus einer beliebigen Menge an möglichen Betriebszuständen automatisch vorab auszuwählen, so daß sich die vom Benutzer einzustellenden Betriebsparameter der Kraftfahrzeugklimaanlage reduzieren lassen, was den Klimatisierungs- und Bedienkomfort der Anlage verbessert.

Bei einer nach Anspruch 2 weitergebildeten Klimaanlage ist die Steuereinheit so gestaltet, daß sie bestimmte Temperatursollwerte, die direkt oder indirekt das angestrebte Kraftfahrzeuginsassenraumklima beschreiben, und/oder bestimmte Leistungsparameter der Kraftfahrzeugklimaanlage einstellt. Diese Einstellung erfolgt wiederum in Abhängigkeit von einem vorgebbaren oder dem tatsächlichen momentanen Betriebsgebiet des Kraftfahrzeuges, wodurch eine Voreinstellung realisiert wird, die dem Kraftfahrzeugbenutzer die Regelung der Kraftfahrzeugklimaanlage erleichtert.

Eine nach Anspruch 3 weitergebildete Klimaanlage erfaßt selbständig die momentane Position des Kraftfahrzeuges und ist damit zur automatischen Bestimmung des Gebietes befähigt, in welchem sich das Fahrzeug momentan befindet. Dadurch wird eine fortlaufende Nachführung des jeweiligen Betriebszustandes der Kraftfahrzeugklimaanlage bei Ortsveränderungen des Fahrzeugs im Betrieb ermöglicht, wodurch sichergestellt ist, daß zu jeder Zeit der richtige gebietsabhängige Betriebszustand eingestellt ist.

Ein bevorzugtes Ausführungsbeispiel der Erfindung wird nachfolgend anhand einer Zeichnung beschrieben.

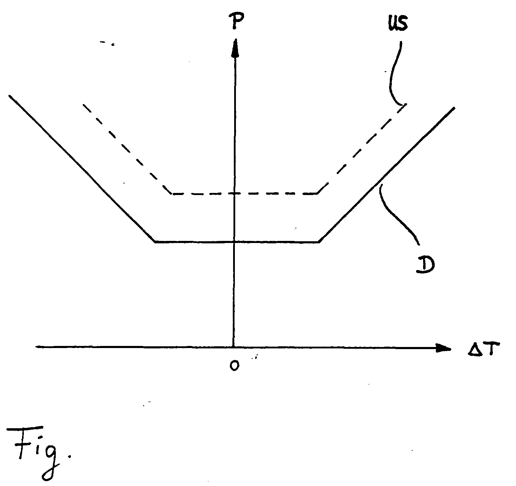

Die einzige Figur zeigt ein Diagramm der Gebläseleistung einer erfindungsgemäßen Kraftfahrzeugklimaanlage in Abhängigkeit von einer Temperatursollwertabweichung für zwei unterschiedliche Betriebszustände der Kraftfahrzeugklimaanlage.

Eine Kraftfahrzeugklimaanlage zur Klimatisierung eines Kraftfahrzeuginnenraumes weist eine gegebenenfalls auch als Wärmepumpe betreibbare Kältemaschine und eine Heizeinrichtung auf, die einen von einem Gebläse aus der Umgebungsluft angesaugten Luftstrom auf eine bestimmte Temperatur, die sogenannte Zulufttemperatur bringen, so daß mit Hilfe dieses temperierten Zuluftstromes die Innenraumtemperatur eingestellt werden kann.

Der Kraftfahrzeugklimaanlage ist eine Steuereinheit zugeordnet, welche die Leistungsparameter der Kraftfahrzeugklimaanlage einstellt. Als derartige Leistungsparameter kommen insbesondere die jeweiligen Leistungen des Luftgebläses, der Kältemaschine und der Heizeinrichtung in Betracht. Eine Veränderung des Wertes wenigstens eines dieser Leistungsparameter bewirkt direkt eine Änderung der Temperatur des Zuluftstromes und damit, wenigstens mittelbar, auch der Innenraumtemperatur.

Die genannten Leistungsparameter werden von der Steuereinheit aufgrund eines für die Kraftfahrzeuginnenraumtemperatur oder für die Temperatur des Zuluftstromes vorzugebenden Sollwertes festgelegt. Sensoren zur Erfassung von Meßwerten bezüglich des Umgebungsluftklimas und des tatsächlichen Innenraumklimas liefern der Steuereinheit Informationen zur Bestimmung der Abweichung insbesondere der Kraftfahrzeuginnenraumtemperatur von ihrem Sollwert. Erfindungsgemäß wird vorgeschlagen, gebietsabhängig unterschiedliche Relationen zwischen wenigstens einem der genannten Leistungsparameter der Klimaanlage und der von der Steuereinheit erfaßten Sollwertabweichung vorzugeben, wobei jeweils eine Relation einem bestimmten Sollbetriebsgebiet für das Kraftfahrzeug zugeordnet ist.

In der Figur sind beispielhaft zwei derartige Relationen zwischen der Leistung P des Luftgebläses und der Sollwertabweichung ΔT der Kraftfahrzeuginsassenraumtemperatur dargestellt. Die erste Relation D ist für das Sollbetriebsgebiet Deutschland, die zweite Relation US hingegen für das Sollbetriebsgebiet USA vorgesehen. Damit ergeben sich zwei verschiedene Ländervarianten für die erfindungsgemäße Kraftfahrzeugklimaanlage, die dem unterschiedlichen Klimakomfortempfinden der jeweiligen Bevölkerung dieser Länder Rechnung tragen. Wie aus der Figur entnehmbar, geschieht dies dort durch eine Erhöhung der Leistung P des Luftgebläses bei der für die USA vorgesehenen Relation US gegenüber der Relation D, wobei angenommen wird, daß die US-amerikanische Bevölkerung typischerweise eine stärkere Klimatisierung, d.h. eine raschere und weitergehendere Innenraumabkühlung und einen höheren Kühlluftstrom wünscht und als angenehm empfindet. Darüber hinaus ist vorgesehen, auch die Relationen zwischen den Leistungen der Kältemaschine und der Heizeinrichtung bei einer für die USA vorgesehenen Ländervariante gegenüber einer für Deutschland vorgesehenen Ländervariante zu modifizieren.

Die so definierten Ländervarianten können als Betriebszustände der Kraftfahrzeugklimaanlage angesehen werden, aus denen von der Steuereinheit entsprechend einer Information über das Sollbetriebsgebiet, beispielsweise Deutschland, der geeignete Betriebszustand der Kraftfahrzeugklimaanlage, beispielsweise die Relation D, selbsttätig ausgewählt und eingestellt wird. Eine derartige Klassifizierung der Betriebszustände nach Ländervarianten kann auch durch eine Klassifizierung nach Regionen oder geografischen Breitengraden ersetzt werden, die das Komfortempfinden der Bewohner im jeweiligen Sollbetriebsgebiet für das Kraftfahrzeug beschreibt.

Der Steuereinheit ist ferner ein Navigationssystem mit einem Sensor zum Empfang von GPS-Signalen zugeordnet, wodurch es der Steuereinheit ermöglicht wird, automatisch das Gebiet festzustellen, in welchem sich das Fahrzeug momentan befindet. Damit kann die Steuereinnheit den momentanen Standort des Fahrzeuges jederzeit feststellen und aufgrund dieser Information einen entsprechenden Betriebszustand der Kraftfahrzeugklimaanlage auswählen und einstellen. Hierbei erweist es sich als vorteilhaft, Klima- oder Kulturzonen zu definieren und einer solchen Klasse wiederum eine Gruppe von Relationen zuzuordnen, die den Betriebszustand der Kraftfahrzeugklimaanlage für die verschiedenen Klima- oder Kulturzonen individuell festlegen. Die Steuereinheit ermittelt dann die jeweilige Klima- oder Kulturzone, in welche der erfaßte Standort des Kraftfahrzeuges fällt.

In einem modifizierten Ausführungsbeispiel ist vorgesehen, einen jeweiligen Betriebszustand der Kraftfahrzeugklimaanlage zusätzlich oder alternativ zu den Relationen US, D für die Luftgebläseleistung durch einen vorab gebietsabhängig vorgebbaren Sollwert für die Kraftfahrzeuginnenraumtemperatur oder für die Temperatur des Zuluftstromes zu kennzeichnen. Es ist ferner vorgesehen, auch einen der genannten Leistungsparameter der Kraftfahrzeugklimaanlage, insbesondere die Leistung des Luftgebläses, die sich besonders nachhaltig auf wesentliche Eigenschaften des Zuluftstromes auswirkt, in Abhängigkeit vom Betriebsgebiet des Kraftfahrzeuges weitgehend fest einzustellen.

Erfindungsgemäß wird somit durch die Klimaanlagen-Steuereinheit aus dem Betriebsgebiet des Kraftfahrzeuges auf das gesondert definierte, durchschnittliche, gebietstypische Empfinden der Benutzer des Kraftfahrzeuges geschlossen und die Kraftfahrzeugklimaanlage in einen Betriebszustand versetzt, der diesem Empfinden in besonderer Weise Rechnung trägt. Dadurch wird die Bedienung der Klimaanlage erleichtert und vereinfacht.

## Patentansprüche

1. Kraftfahrzeugklimaanlage mit mehreren, von einer zugehörigen Steuereinheit einstellbaren Betriebszuständen,
**dadurch gekennzeichnet, daß**
die Steuereinheit den jeweiligen Betriebszustand der Kraftfahrzeugklimaanlage in Abhängigkeit von einem vorgebbaren Sollbetriebsgebiet für das Kraftfahrzeug in Form einer Region oder eines Landes oder von der Region oder dem Land, in welchem sich das Fahrzeug momentan befindet, selbsttätig einstellt.

2. Kraftfahrzeugklimaanlage nach Anspruch 1,
**dadurch gekennzeichnet, daß**
die Steuereinheit den Sollwert für die von der Klimaanlage zu regelnde Kraftfahrzeuginnenraumtemperatur und/oder für die Temperatur des in den Kraftfahrzeuginnenraum einzublasenden Zuluftstromes und/oder die Leistung eines Luftgebläses, einer Kältemaschine und/oder einer Heizeinrichtung der Klimaanlage in Abhängigkeit von einem vorgebbaren Sollbetriebsgebiet für das Kraftfahrzeug in Form einer Region oder eines Landes oder von der Region oder dem Land, in welchem sich das Fahrzeug momentan befindet, selbsttätig einstellt.

3. Kraftfahrzeugklimaanlage nach Anspruch 1 oder 2,
**dadurch gekennzeichnet, daß**
der Steuereinheit zur selbsttätigen Bestimmung der Region oder des Landes, in welchem sich das Kraftfahrzeug befindet, eine Fahrzeugpositionsbestimmungseinrichtung zugeordnet ist.
